# EUROPEAN PATENT APPLICATION

(11) **EP 2 000 347 A1**
(43) Date of publication of application: **10.12.2008**
(21) Application number: 07252343.4
(22) Date of filing: 09.06.2007
(51) Int. Cl.: B60K 15/077

(54) **Fuel module**

(71) Applicant: Delphi Technologies, Inc., Troy, Michigan 48007 (US)
(72) Inventor: Sánchez, Michel, F-54260 Allondrelle (FR); Soubiran, Patrick, L-4170 Esch-sur-Alzette (LU)
(74) Representative: Waller, Stephen

(57) **Abstract**

A fuel module for a vehicle fuel tank (1) comprising a primary fuel reservoir (12) defining a housing within which is mounted a fuel pump (14) and at least one venture jet pump (18), the primary reservoir being insertable through an access opening (3) in the fuel tank (1) to be locatable within a secondary fuel reservoir (22) provided within the fuel tank (1), means being provided for passing from the secondary reservoir (22) into the primary reservoir (12).

## Description

The present invention relates to a fuel module for a vehicle fuel tank.

A fuel pump is typically provided in a vehicle fuel tank to pump fuel to the fuel from the tank to the fuel delivery system (e.g. carburettor or fuel injection system) of the engine.

It is desirable to position the inlet of the fuel pump as near as possible to the lowest level in the tank so that a source of fuel will be available even when fuel level is low. Despite such a placement of the fuel inlet, events during vehicle operation such as cornering, braking and acceleration can cause the fuel to "slosh" around, potentially uncovering the fuel pump inlet. Driving or parking on a slope could similarly result in the fuel pump inlet being uncovered. When the inlet is exposed, the fuel pump sucks air (or fuel vapour) causing the engine to stammer and stall. An additional problem occurs at engine start-up when fuel tank level is low and there is insufficient fuel at the pump inlet.

In order to mitigate this problem, the fuel pump is usually provided within a fuel reservoir adapted to maintain a supply of fuel around the inlet of the fuel pump. Fuel is typically aspirated into the fuel reservoir by means of one or more jet pumps, drawings fuel into the reservoir from the lowermost points of the fuel tank. The fuel reservoir may comprise a fuel module including the fuel pump, one or more venturi jet pumps and a number of other functional components, such as a fuel filter, pressure regulator, fuel level sensor etc.

Due to tight space requirements within the vehicle for the fuel tank and the need to conform the fuel tank around other components, and also the need to minimise weight, blow moulded or thermoformed polymeric fuel tanks are advantageously used in modern vehicles due to their ability to be readily moulded or formed to complex shapes, due to their light weight, and the reduction in the possibility of leakages due to the one piece construction of such tanks (particularly in the case of blow moulded fuel tanks).

However, a disadvantage of such fuel tanks is the limited accessibility to the interior of the tank once it has been formed which causes problems when mounting the fuel module within the tank. GB 2,101,520 and WO 97/25219 attempt to resolve this problem by placing the fuel module within the fuel tank during manufacture. By placing the fuel module within the former in which the tank is moulded, the tank can be moulded around the fuel module and the only apertures that need to be made in the tank are those required for the fuel filler and any fuel delivery and vent pipes. A problem with such arrangement is that the fuel module cannot subsequently be removed for maintenance or repair.

Another more commonly used option is to ensure that the dimensions of the fuel module are such that the fuel module can be inserted through a relatively small access opening in an upper part of fuel tank. A mounting flange provided on an upper part of the fuel module is securable within the access opening to close the access opening and hold the fuel module in place within the fuel tank. However, the requirement for the fuel module to pass through an access opening in the fuel tank places severe limitations on the volume of the fuel reservoir, particularly where a large number of separate components are to be integrated into the fuel module, such as a fuel pump, pressure relief valve, one or more venturi jet pumps and/or a fuel level sensor.

Such known fuel modules typically have a maximum fuel reservoir volume of between 0.5 and 0.8 litres. For vehicles having larger engines (and thus greater fuel consumption) or those required to operate in more extreme conditions (e.g. off-road vehicles), the available reservoir volume may be insufficient, particularly when the fuel module must house a large number of additional components. Such applications frequently require a fuel reservoir volume of between 1.5 and 3 litres.

According to the present invention there is provided a fuel module for a vehicle fuel tank comprising a primary fuel reservoir defining a housing within which is mounted a fuel pump and at least one venture jet pump, the primary reservoir being insertable through an access opening in the fuel tank to be locatable within a secondary fuel reservoir provided within the fuel tank, means being provided for passing from the secondary reservoir into the primary reservoir.

Preferably the secondary reservoir has a fuel volume at least twice that of the primary reservoir.

Preferably said secondary reservoir is defined by an upstanding wall structure extending from the bottom of the fuel tank.

In a preferred embodiment the secondary reservoir is formed integrally with the fuel tank. Optionally the secondary reservoir may comprise a separate component attached to the bottom of the fuel tank during manufacture of the fuel tank.

In a preferred embodiment, the primary and secondary reservoirs include complimentary interconnection means, comprising a male connection member provided at or adjacent a lower region of the primary reservoir and a female connection member provided at or adjacent a lower region of the second reservoir, said male connection member being receivable within said female connection member and said male and female connection members each having a fluid passageway formed therethrough, said fluid passageways cooperating to provide a flow path for fuel between a fuel line extending from said secondary reservoir to a pocket of said fuel tank and said primary reservoir when said male connection member is received in said female connection member. Seal means, such as an O-ring, may be provided on one or both of the male and female connection members.

Said female connecting member of said secondary reservoir may comprise a pipe connection spigot extending outwardly of the secondary reservoir onto which is fitted said fuel line. Preferably said male connection member of said primary reservoir communicates with a venturi jet pump of said primary reservoir for aspirating fuel from said pocket into said primary reservoir. Preferably said primary reservoir is provided with a further venturi jet pump for aspirating fuel from said secondary reservoir into said primary reservoir. Alternatively fuel communication between the primary and secondary reservoirs may be provided by one or more apertures or inlet ports provided in a lower region of the primary reservoir.

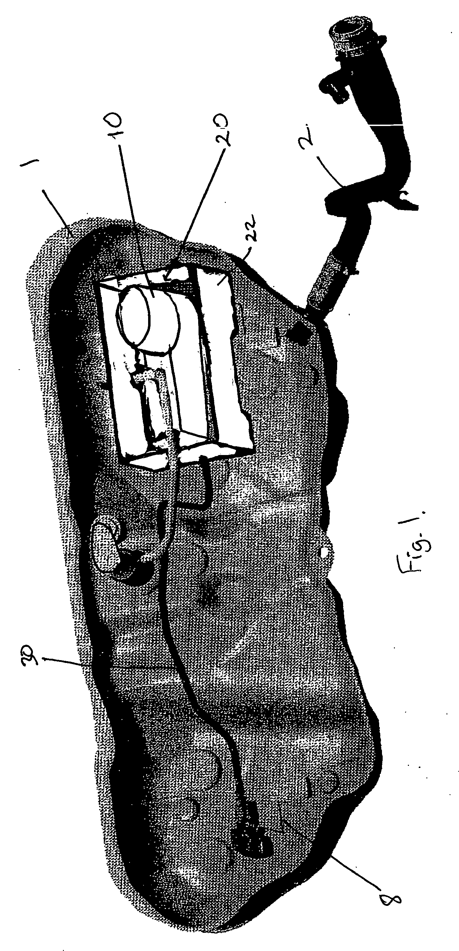

An embodiment of the present invention will now be described, by way of example only, with reference to the accompanying drawings, in which:-
Fig. 1 is a perspective view of the fuel tank a fuel tank incorporating a fuel module according to an embodiment of the present invention with the upper part of the fuel tank omitted for clarity;

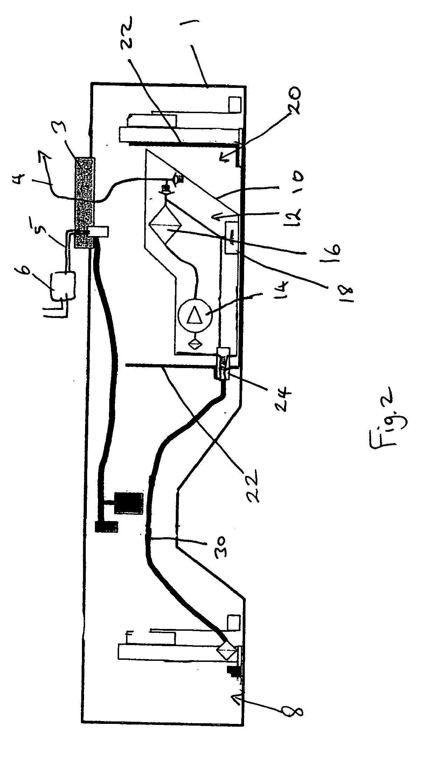

Fig. 2 is a schematic sectional view of the tank of Fig. 1; and
Fig. 3 is a detailed sectional view of the connection means between the first and second fuel reservoirs of the fuel module of Fig. 1.

As illustrated in the drawings, a vehicle fuel tank 1 is provided with a filler pipe 2 for delivering fuel into the fuel tank 1 and an access opening 3 in an upper region of the fuel tank for passage of at least one fuel line 4 for delivery fuel to the vehicle engine (an optionally a return line for returning excess fuel to the fuel tank), for passage of a vent line 5 for venting the headspace of the fuel tank to the atmosphere, via an adsorption canister 6. A fuel module 10 is located within the fuel tank 1, the fuel module 10 comprising a housing defining a primary fuel reservoir 12 and having mounted therein a fuel pump 14, as fuel filter 16 and one or more venturi jet pumps 18 for drawing fuel into the primary reservoir from one or more pockets 8 defined within the lower regions of the fuel tank 1.

The fuel module 10 is dimensioned to be insertable through the access opening 3 to enable installation of the fuel module 10 into the fuel tank 1 and subsequent removal of the fuel module 10 therefrom for servicing or replacement.

Due to the requirement for the fuel module 10 to be able to pass through the access opening 3, the size and thus the fuel capacity of the primary reservoir 12 is limited. Often such limited fuel capacity is insufficient to avoid fuel starvation problems when the vehicle is operated with a low fuel level and is subject to extreme dynamic forces or is operated at extreme angles of inclination. In order to provide an increased fuel capacity around the fuel pump 14, a secondary fuel reservoir 20 is formed on the base of the fuel tank 1, within which the fuel module 10 is located. The secondary reservoir 20 is defined by an upstanding wall structure 22 extending from the base of the fuel tank 1 and formed during manufacture tank.

The secondary reservoir 20 may be integrally formed with the fuel tank 1 during moulding of the fuel tank. Alternatively it is envisaged that the secondary reservoir 20 may comprise a separate structure that is secured to the base of the fuel tank 1 during manufacture thereof. In either case, it can be seen that the secondary reservoir 20 does not need to pass through the access opening 3 and therefore can be of considerably greater volume that the primary reservoir 12, enabling the provision of a total reservoir capacity of between 2 and 5 litres.

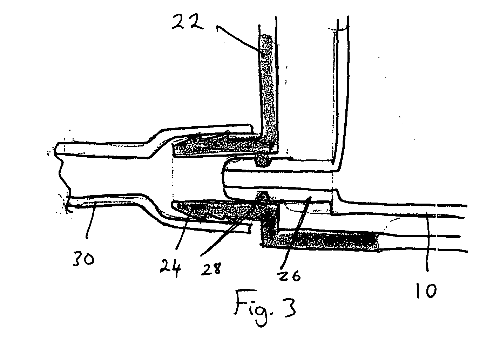

To enable the venturi jet pump 18 to draw fuel from the fuel pocket 8, the secondary reservoir is provided with a pipe connection spigot 24 on an outer wall thereof connected to a fuel line 30 extending into the fuel pocket 8, the pipe spigot communicating with the interior of the secondary reservoir 20, an inner end of the pipe connection spigot 24 defining a female connection member into which a cooperating male connection member 26 provided on a lower region of the fuel module 10 is receivable to provide a flow path for fuel between the fuel line 30 and the primary reservoir 12, as illustrated in Fig. 3. A sealing O-ring 28 is located in a circumferential groove around the male connection member 26. Thus the fuel module 10 can be readily inserted through the access opening and connected to the fuel line 30 leading to the pocket 8 in a single operation without requiring complex pipe connection operation within the fuel tank.

Fuel may pass from the secondary reservoir 20 to the primary reservoir 12 by means of a venture jet pump provided within the fuel module 10 or by simply providing one or more apertures in a lower region of the fuel module housing 10 to allow fluid communication between the two reservoirs.

The present invention provides a modular architecture wherein a standardised fuel module can be utilised for a number of vehicle applications, a secondary reservoir being provided in the fuel tank of a desired volume whenever a greater reservoir capacity is required.

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

## Claims

1. A fuel module for a vehicle fuel tank comprising a primary fuel reservoir defining a housing within which is mounted a fuel pump and at least one venture jet pump, the primary reservoir being insertable through an access opening in the fuel tank to be locatable within a secondary fuel reservoir provided within the fuel tank, means being provided for passing from the secondary reservoir into the primary reservoir.

2. A fuel module as claimed in claim 1, wherein the secondary reservoir has a fuel volume at least twice that of the primary reservoir.

3. A fuel module as claimed in any preceding claim, wherein said secondary reservoir is defined by an upstanding wall structure extending from the bottom of the fuel tank.

4. A fuel module as claimed in any preceding claim, wherein the secondary reservoir is formed integrally with the fuel tank.

5. A fuel module as claimed in any of claims 1 to 4, wherein the secondary reservoir comprises a separate component attached to the bottom of the fuel tank during manufacture of the fuel tank.

6. A fuel module as claimed in any preceding claim, wherein the primary and secondary reservoirs include complimentary interconnection means, comprising a male connection member provided at or adjacent a lower region of the primary reservoir and a female connection member provided at or adjacent a lower region of the second reservoir, said male connection member being receivable within said female connection member and said male and female connection members each having a fluid passageway formed therethrough, said fluid passageways cooperating to provide a flow path for fuel between a fuel line extending from said secondary reservoir to a pocket of said fuel tank and said primary reservoir when said male connection member is received in said female connection member.

7. A fuel module as claimed in claim 6, wherein seal means, such as an O-ring, is provided on one or both of the male and female connection members.

8. A fuel module as claimed in claim 6 or claim 7, wherein aid female connecting member of said secondary reservoir comprises a pipe connection spigot extending outwardly of the secondary reservoir onto which is fitted said fuel line.

9. A fuel module as claimed in any of claims 6 to 8, wherein said male connection member of said primary reservoir communicates with a venturi jet pump of said primary reservoir for aspirating fuel from said pocket into said primary reservoir.

10. A fuel module as claimed in any preceding claim wherein either said primary reservoir is provided with a further venturi jet pump for aspirating fuel from said secondary reservoir into said primary reservoir or fuel communication between the primary and secondary reservoirs is provided by one or more apertures or inlet ports provided in a lower region of the primary reservoir.
